# EUROPÄISCHE PATENTSCHRIFT

(11) **EP 2 009 960 B1**
(45) Veröffentlichungstag und Bekanntmachung des Hinweises auf die Patenterteilung: **29.04.2015**
(21) Anmeldenummer: 08156442.9
(22) Anmeldetag: 19.05.2008
(51) Int. Cl.: H05B 33/08

(54) **Schutzschaltung für eine Leuchtdiode**
LED protection
Circuit protecteur pour une diode led

(30) Priorität: 18.06.2007 DE 102007027951
(43) Veröffentlichungstag der Anmeldung: 31.12.2008
(73) Patentinhaber: Tridonic AG, 8755 Ennenda (CH)
(72) Erfinder: Zimmermann, Michael, 8888 Heiligkreuz (CH)
(74) Vertreter: Rupp, Christian

(56) Entgegenhaltungen:
- DE-A1-102005 008 100
- DE-B3- 10 358 447
- FR-A1- 2 864 418
- US-A1- 2006 279 262

## Beschreibung

Leuchtdioden (LEDs) haben sich in den letzten Jahren als Lichtquelle in vielfacher Ausfertigung etabliert. Die Lichtstärke von einzelnen LEDs ist jedoch zu gering, um für Raumleuchten oder dergleichen eingesetzt werden zu können.

Aus diesem Grunde wird eine Vielzahl von einzelnen LEDs gemeinsam als Modul betrieben. Die LEDs können parallel oder in Serie geschaltet werden, oder es kann eine Mischung beider Schaltungsarten verwendet werden. Dabei wirken sich die möglichen Defekte einzelner LEDs für die einzelnen Schaltungsarten unterschiedlich aus. Bei einer Parallelschaltung von LEDs führt ein Kurzschlussdefekt einer einzelnen LED zum Totalausfall des gesamten Moduls. Ein Unterbrechungsdefekt hat dagegen bei einer Parallelschaltung keine schwerwiegenden Konsequenzen.

Bei einer Serienschaltung von LEDs ist die Situation genaue umgekehrt. Ein Kurzschlussdefekt hat bei einer größeren Zahl von in Serie geschalteten LEDs auf den gesamten Modul kaum einen Einfluss, während ein Unterbrechungsdefekt einer einzelnen LED zum Ausfall des gesamten Moduls führt.

Da die Betriebsspannung einer LED mit ca. 3 bis 5V - verglichen mit der Netzspannung von 220V - relativ gering ist, gibt man in der Regel der Serienschaltung von LEDs für den Aufbau von Modulen den Vorzug. Bei solchen Modulen muss deshalb Sorge dafür getragen werden, dass er auch dann noch weiter arbeitet, wenn eine einzelne LED durch Unterbrechungsdefekt ausfällt.

Eine erste Maßnahme in dieser Richtung besteht darin, dass man zu jeder LED eine Zener-Diode mit entgegengesetzter Polung parallel schaltet. Dabei ist naturgemäß darauf zu achten, dass die Zenerspannung, bei der der Durchbruch der Zener-Diode erfolgt, höher ist, als die Betriebsspannung der einzelnen LED in einer Serienschaltung, und zwar auch nach Auftreten der Unterbrechungsdefektes. Geht man von der oben erwähnten Betriebsspannung für eine LED zwischen 3 bis 5V Gleichspannung aus, so sollte die Zenerspannung bei bis 6V Gleichspannung liegen. Bei dieser Spannung wird die Zener-Diode niederohmig, d.h. sie zieht schlagartig einen hohen Strom, allerdings unter Aufrechterhaltung der Zenerspannung. Die bei einem Unterbrechungsdefekt auftretende Verlustleistung ergibt sich durch das Produkt aus der Zenerspannung und dem durch die Zenerdiode fließenden Strom, der seinerseits durch die Konstantstromquelle bestimmt ist, die für das Betreiben von LEDs üblich und notwendig ist. Die genannte Verlustleistung bestimmt daher die erforderlichen Kühlmittel für den Modul weitgehend mit.

Um die Verlustleistung bei Auftreten eines Unterbrechungsdefektes einer LED in einem Modul mit in Serie geschalteten LEDs zu reduzieren, wurde in der US 2006/0279262 A1 vorgeschlagen, die Zenerdiode durch eine Schutzschaltung zu ersetzen, welche aus einem Überbrückungsschaltungsteil und einem Triggerbauteil besteht.

Der Überbrückungsschaltungsteil wird von dem Triggerbauteil von einem hochohmigen Zustand in einen niederohmigen Zustand umgeschaltet, wenn der Triggerbauteil einen Unterbrechungsdefekt an der LED feststellt. Der Triggerbauteil enthält einen Komparator mit zwei Eingängen. Der eine Eingang ist mit einer Referenzschaltung verbunden. Der andere Eingang ist mit dem Abgriff eines aus zwei Widerständen bestehenden Spannungsteilers verbunden, wobei der Spannungsteiler parallel zu der zu überwachenden LED liegt. Der Überbrückungsschaltungsteil enthält mindestens zwei Bipolartransistoren unterschiedlicher Dotierungsfolgen, die kaskadenartig verschalten sind, derart, dass die Basis jeder der beiden Transistoren mit dem Kollektor des jeweils anderen Transistors verbunden ist, dass die Emitter der beiden Transistoren mit je einer der beiden Elektroden der LED verbunden sind und dass auch jeder Kollektor der beiden Transistoren jeweils über einen Kollektorwiderstand mit je einer der beiden Elektroden der LED verbunden ist. Ein Emitter der beiden Transistoren ist mit dem Ausgang des Komparators verbunden. Darüber hinaus weist die Schutzschaltung noch eine Diode auf, welche parallel zu der LED liegt, jedoch umgekehrt gepolt ist, so dass sie die Schaltung bei einem verpolten Anschluss des LED-Moduls an die DC-Spannungsversorgung schützt.

Die bekannte Schutzschaltung weist im Hinblick auf einen Unterbrechungsdefekt der LED zwei stabile Schaltzustände auf. Solange die von dem Spannungsteiler abgegriffene und an dem einen Eingang des Komparators anliegende Spannung niedriger als die Referenzspannung ist, die an dem anderen Eingang des Komparators anliegt, ist der Komparatorschaltungsteil hochohmig. Wenn die LED dagegen einen Unterbrechungsdefekt hat, steigt die von dem Spannungsteiler abgegriffene Spannung über die Referenzspannung, mit der Folge, dass der Triggerbauteil ein entsprechendes Triggersignal an den Überbrückungsschaltungsteil abgibt, wodurch letzterer von dem hochohmigen Zustand in einen niederohmigen Zustand umgeschaltet wird und den Strom der LED übernimmt. Die an dem Überbrückungsschaltungsteil abfallende Spannung ist im Falle eines Unterbrechungsdefekts der LED erheblich niedriger als die Zenerspannung einer Zener-Diode, mit der Folge, dass auch die Verlustleistung einer solchen Schutzschaltung wesentlich geringer ist. Dementsprechend können auch die Kühlmaßnahmen weniger aufwendig gestaltet werden, als bei Verwendung einer Zener-Diode.

Der Erfindung liegt die Aufgabe zugrunde, die bekannte Schutzschaltung dahingehend zu verbessern, dass sie weniger Schaltungsaufwand benötigt.

Die Aufgabe ist erfindungsgemäß durch die Merkmale des unabhängigen Ansprüchs gelöst. Die Unteransprüche bilden den zentralen Gedanken der Erfindung in besonders vorteilhafter Weise weiter.

Anstelle der Referenzschaltung, des Komparators und des Spannungsteilers ist bei dem erfindungsgemäßen Triggerbauteil also nur ein Triggerbauteil vorgesehen, das nach Erfüllung der Triggerfunktion durch den Überbrückungsschaltungsteil kurzgeschlossen wird, mit der Folge, dass die Verlustleistung nur durch den niederohmigen Überbrückungsschaltungsteil bestimmt wird und daher niedrig gehalten werden kann.

Während der für die Schutzschaltung beanspruchte Schutz unabhängig von der LED gelten soll, zu der sie parallel zu schalten ist, betrifft die vorliegende Erfindung weiterhin eine Kombination aus einer LED und einer Schutzschaltung mit den vorstehend beschriebenen Eigenschaften.

Ein Ausführungsbeispiel der Erfindung wird nachfolgend anhand der Zeichnungen beschrieben.

Es zeigen:
- Fig. 1: ein Halbleitersubstrat mit der erfindungsgemäßen Schutzschaltung und einer LED;
- Fig. 2: eine grafische Darstellung der Abhängigkeit des Stromes I_{AC} von der Spannung V_{AC} bei der Schutzschaltung nach Fig. 1, wenn die LED dementsprechend der Überbrückungsschaltungsteil inaktiv ist.
- Fig. 3: die Abhängigkeit I_{AC}/V_{AC} wie in Fig. 2, jedoch nach Auftreten eines Unterbrechungsdefektes in der LED und nach der Aktivierung des Überbrückungsschaltungsteiles; und
- Fig. 4: eine Serienschaltung von LEDs mit der erfindungsgemäßen Schutzschaltung.

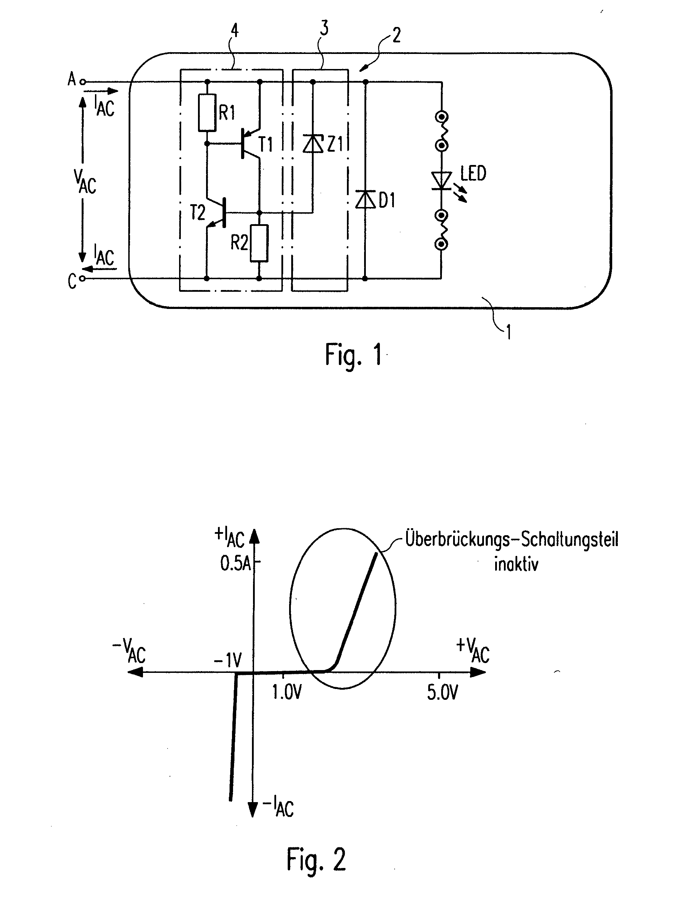

In Fig. 1 ist als Beispiel für die Integration einer erfindungsgemässen Schaltung ein Halbleitersubstrat 1 gezeigt, in das die erfindungsgemäße Schutzschaltung 2 eindotiert ist. Die Schutzschaltung 2 besteht aus einem Triggerbauteil 3 und einem Überbrückungsschaltungsteil 4. Ferner ist noch eine Rückfluss-Diode D1 vorgesehen. Da dazugehörige LED ist im Bondverfahren auf das Substrat 1 aufgebracht worden.

Der Überbrückungsschaltungsteil 4 enthält zwei Bipolartransistoren T1 und T2 unterschiedlicher Dotierungsfolge. Der Transistor T1 ist ein pnp-Transistor und der Transistor T2 ist ein npn-Transistor. Die beiden Transistoren sind kaskadenförmig verschaltet, d.h. die Basis des Transistors T1 liegt am Kollektor des Transistors T2, während die Basis des Transistors T2 am Kollektor des Transistors T1 liegt. Die beiden Kollektoren sind kaskadenförmig verschaltet, derart, dass die Basis des Transistors T1 am Kollektor des Transistors T2 liegt, während die Basis des Transistors T2 am Kollektor des Transistors T1 liegt. Der Emitter des Transistors T1 liegt an der Anodenleitung A. Der Emitter des Transistors T2 liegt an der Kathodenleitung T. Der Kollektor des Transistors T2 ist über einen Kollektorwiderstand R1 mit der Anodenleitung A verbunden. Der Kollektor des Transistors T1 ist über einen Kollektorwiderstand R2 mit der Kathodenleitung C verbunden.

Das Triggerbauteil kann aus unterschiedlichen einfachen und vorzugsweise gut integrierbaren Bauteilen bestehen, wie bspw. eine Zener-Diode, ein Ohm'scher Widerstand, eine Kombination aus einem VDR-Widerstand und einer Zener-Diode etc. bestehen.

Im Folgenden wird die Erfindung in keineswegs beschränkender Weise anhand einer Zener-Diode als Triggerbauteil erläutert.

Der Triggerbauteil 3 besteht gemäss diesem Ausführungsbeispiel aus einer Zener-Diode Z1, die sich zwischen der Anodenleitung und der Basis des Transistors T2 erstreckt. Die Zener-Diode Z1 ist in Bezug auf die LED antiparallel geschaltet. Gleiches gilt für die Rückflussdiode D1, die den Rückstrom der LED im Falle eines Kurzschlusses übernimmt, falls die Spannung an den LED-Anschlüssen invers zu der normalen Polung es werden sollte.

An dem Substrat 1 liegt zwischen der Anodenleitung A und der Kathodenleitung C eine Spannung V_{AC} an, die eine Gleichspannung oder eine pulsierende Gleichspannung sein sollte, um die LED zur Lichtabgabe zu veranlassen. Der durch die Schutzschaltung fließende Strom ist mit I_{AC} bezeichnet.

Bei Normalbetrieb der LED gilt die in Fig. 2 gezeigte Kurve, welche die Abhängigkeit des Stromes I_{AC} von der Spannung V_{AC} zeigt. Bei positiver Spannung gibt die LED zwischen zwei und drei Volt Licht ab. Die Kurve ist die einer normalen Diode. Die Überbrückungsschaltung 4 ist in diesem Fall hochohmig.

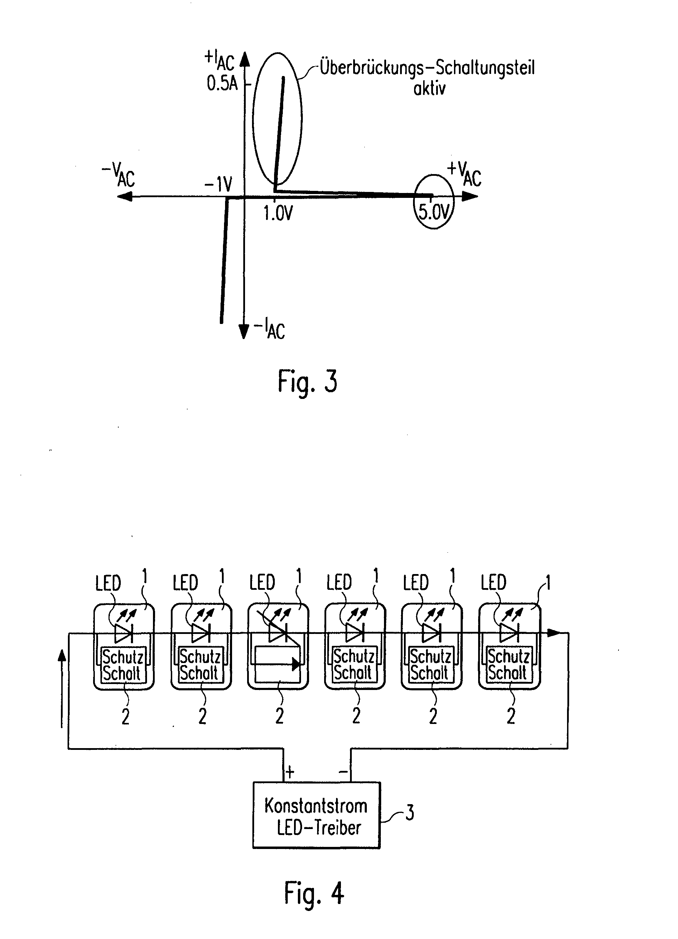

Wenn in der LED ein Unterbrechungsdefekt auftritt, hat dies zur Folge, dass die Spannung zwischen den Anschlüssen der LED ansteigt und damit auch die Spannung zwischen der Anodenleitung A und der Kathodenleitung C. Die Zener-Diode Z1 ist nun so dimensioniert, dass es in diesem Fall zum Durchbruch kommt. Das bedeutet, dass die Basis des npn-Transistors T2 auf das Potential der Anodenleitung (positiv) gezogen wird, wodurch T2 leitend wird. Der damit verstärkt durch R1 fließende Strom führt dazu, dass die Basis von T1 negativ wird, mit der Folge, dass der pnp-Transistor T1 ebenfalls leitend wird. Die Überbrückungsschaltung wird aktiv und kippt in den zweiten stabilen Zustand, der durch die Kurve in Fig. 3 repräsentiert ist. Bei der Erfindung rastet die Überbrückungsschaltung in diesem zweiten Zustand ein. Man erkennt in Figur 3, dass bei etwa 5V die Zener-Diode Z1 durchbricht und dass dann die Überbrückungsschaltung 4 schlagartig niederohmig wird. Die Verlustleistung ist im wesentlichen bestimmt durch den relativ geringen Spannungsabfall von bspw. 1 V über dem Überbrückungsschaltungsteil 4 und daher relativ gering (im Vergleich zu der Vorwärtsspannung einer LED von bspw. 3 bis 4 V).

In Fig. 4 ist ein aus sechs LEDs bestehender Modul mit Serienschaltung der LEDs gezeigt, die alle mit der erfindungsgemäßen Schutzschaltung 2 versehen sind. Die dritte LED in der Reihe hat einen Unterbrechungsdefekt, wobei jedoch ihr Strom durch die Schutzschaltung 2 übernommen wird, mit der Folge, dass der Modul nahezu unbeeinflusst weiterarbeitet und Licht abgibt. Die Serienschaltung wird vom Konstantstrom LED-Treiber 3 mit einem konstanten Strom versorgt.

Die in Fig. 1 gezeigten Bipolartransistoren T1 und T2 haben die Funktion von elektronischen Schaltern. Dementsprechend müssen keinen Bipolartransistoren verwendet werden, sondern es können auch andere elektronische Schalterelemente, wie beispielsweise FETs oder dergleichen verwendet werden.

## Patentansprüche

1. Schutzschaltung für eine zwischen zwei Knotenpunkten (A,C) geschaltete LED,
welche bei einem Unterbrechungsdefekt der LED den Stromfluss zwischen den Knotenpunkten (A,C) übernimmt,
mit einem bei einem Normalbetrieb der LED hochohmigen Überbrückungsschaltungsteil (4) und einem separat dazu vorgesehenen Triggerbauteil (3),
wobei der Überbrückungsschaltungsteil (4) zwei elektronische Schalterelemente (T1, T2) enthält, von denen jedes zwei Schalteranschlüsse und einen Steueranschluss aufweist,
wobei ein Schalteranschluss eines der beider Schalterelemente (T1) mit einem Anschluss der LED verbunden ist und ein Schalteranschluss des anderen Schalterelemente (T2) mit dem anderen Anschluss der LED verbunden ist,
wobei der jeweils andere Schalteranschluss der beiden Schalterelemente (T1, T2) jeweils mit dem Steueranschluss des anderen Schalterelements (T2, T1) verbunden ist,
**dadurch gekennzeichnet,**
**dass** das Triggerbauteil (3) durch eine Zener-Diode (Z1) gebildet ist,
wobei die Zener-Diode (Z1) zu dem einen Schalterelement (T1) parallel geschaltet ist,
und **dass** die Zener-Diode (Z1) dazu ausgebildet ist, bei Auftreten des Unterbrechungsdefekts durch Umschalten auf Durchbruch den Stromfluss zwischen den Knotenpunkten (A,C) zu übernehmen, bis der dabei an der Zener-Diode (Z1) entstehende Spannungsabfall den Überbrückungsschaltungsteil (4) von dem hochohmigen in einen niederohmigen Zustand, in welchem das eine Schalterelement (T1) leitend ist, umschaltet, wodurch der Spannungsabfall an der Zener-Diode (Z1) verringert wird.

2. Schutzschaltung nach Anspruch 1,
**dadurch gekennzeichnet,**
**dass** die beiden Schalterelemente (T1, T2) Bipolartransistoren unterschiedlicher Dotierungsfolge sind und so geschaltet sind, dass der Emitter des pnp-Transistors (T1) den mit der Anode der LED zu verbindenden Schalteranschluss und der Emitter des npn-Transistors (T2) den mit der Kathode der LED zu verbindenden Steueranschluss bilden, und
**dass** die Anode der Zener-Diode (Z1) mit der Basis des npn-Transistors (T2) und die Kathode der Zener-Diode (Z1) mit dem Emitter des pnp-Transistors (T1) verbunden ist.

3. Schutzschaltung nach Anspruch 2,
**dadurch gekennzeichnet,**
**dass** der Kollektor jedes der beiden Transistoren (T1, T2) über einen Kollektorwiderstand (R1, R2) mit der betreffenden Elektrode der LED verbunden ist.

4. Schutzschaltung nach Anspruch 2 oder 3,
**dadurch gekennzeichnet,**
**dass** zwischen die mit der LED zu verbindenden Schalteranschlüsse eine zur Übernahme eines möglichen Rückwärtsstromes der LED bestimmte Schutzdiode geschaltet ist, die invers zu der LED gepolt ist.

5. Schutzschaltung nach einem der Ansprüche 1 bis 4,
**dadurch gekennzeichnet,**
**dass** diese als integrierte Schaltung ausgebildet ist.

6. Serienschaltung von LEDs,
wobei jeder LED eine Schutzschaltung nach einem der Ansprüche 1 bis 5 zugeordnet ist.

## Claims

1. Protective circuit for an LED which is connected between two node points (A, C),
which, in the event of an interruption defect in the LED, takes up the current flow between the node points (A, C),
comprising a bridging circuit part (4) which has a high resistance during normal operation of the LED and a trigger component part (3) provided separately from said bridging circuit part,
wherein the bridging circuit part (4) contains two electronic switch elements (T1, T2), each of which has two switch connections and one control connection, wherein one switch connection of one of the two switch elements (T1) is connected to a connection of the LED and one switch connection of the other switch elements (T2) is connected to the other connection of the LED, wherein the respective other switch connection of the two switch elements (T1, T2) is connected in each case to the control connection of the other switch element (T2, T1),
**characterized in that**
the trigger component part (3) is formed by a zener diode (Z1),
wherein the zener diode (Z1) is connected in parallel with one switch element (T1),
and **in that** the zener diode (Z1) is designed to take up the current flow between the node points (A, C) in the event of the occurrence of an interruption defect by virtue of switchover to breakdown until the voltage drop produced in the process across the zener diode (Z1) switches over the bridging circuit (4) from the high-resistance state to a low-resistance state, in which one switch element (T1) is on, as a result of which the voltage drop across the zener diode (Z1) is reduced.

2. Protective circuit according to Claim 1,
**characterized**
**in that** the two switch elements (T1, T2) are bipolar transistors with a different doping sequence and are switched in such a way that the emitter of the pnp transistor (T1) forms the switch connection to be connected to the anode of the LED and the emitter of the npn transistor (T2) forms the control connection to be connected to the cathode of the LED, and
**in that** the anode of the zener diode (Z1) is connected to the base of the npn transistor (T2) and the cathode of the zener diode (Z1) is connected to the emitter of the pnp transistor (T1).

3. Protective circuit according to Claim 2,
**characterized**
**in that** the collector of each of the two transistors (T1, T2) is connected to the relevant electrode of the LED via a collector resistor (R1, R2).

4. Protective circuit according to Claim 2 or 3,
**characterized**
**in that** a protective diode intended for taking up a possible reverse current of the LED is connected between the switch connections to be connected to the LED and has an inverse polarity with respect to the LED.

5. Protective circuit according to one of Claims 1 to 4,
**characterized**
**in that** said protective circuit is in the form of an integrated circuit.

6. Series circuit of LEDs,
wherein a protective circuit according to one of Claims 1 to 5 is assigned to each LED.

## Revendications

1. Circuit de protection pour une LED connectée entre deux points de jonction (A, C),
lequel, en cas de défaut d'interruption de la LED, prend en charge la circulation de courant entre les points de jonction (A, C),
avec une partie de circuit de pontage (4), qui est à haute impédance en cas de fonctionnement normal de la LED, et un composant déclencheur (3) prévu séparément de celle-ci,
dans lequel la partie de circuit de pontage (4) comporte deux éléments électroniques de commutation (T1, T2), dont chacun présente deux bornes de commutation et une borne de commande,
dans lequel une borne de commutation de l'un des deux éléments de commutation (T1) est reliée à une borne de la LED et une borne de commutation de l'autre élément de commutation (T2) est reliée à l'autre borne de la LED,
dans lequel l'autre borne de commutation respective des deux éléments de commutation (T1, T2) est reliée respectivement à la borne de commande de l'autre élément de commutation (T2, T1),
**caractérisé en ce que**
le composant déclencheur (3) est formé par une diode Zener (Z1),
dans lequel la diode Zener (Z1) est montée en parallèle de l'un des éléments de commutation (T1),
et **en ce que** la diode Zener (Z1) est configurée pour, en cas d'apparition du défaut d'interruption, prendre en charge la circulation de courant entre les points de jonction (A, C) au moyen d'une commutation en mode avalanche, jusqu'à ce que la chute de tension se produisant à cette occasion à la diode Zener (Z1) commute la partie de circuit de pontage (4) de l'état de haute impédance à un état de basse impédance, dans lequel ledit un des éléments de commutation (T1) est passant, par quoi la chute de tension à la diode Zener (Z1) est réduite.

2. Circuit de protection selon la revendication 1,
**caractérisé en ce que**
les deux éléments de commutation (T1, T2) sont des transistors bipolaires à séquence de dopage différente et sont connectés de telle sorte que l'émetteur du transistor pnp (T1) forme la borne de commutation destinée à être reliée à l'anode de la LED, et l'émetteur du transistor npn (T2) forme la borne de commande destinée à être reliée à la cathode de la LED, et
**en ce que** l'anode de la diode Zener (Z1) est reliée à la base du transistor npn (T2), et la cathode de la diode Zener (Z1) est reliée à l'émetteur du transistor pnp (T1).

3. Circuit de protection selon la revendication 2,
**caractérisé en ce que**
le collecteur de chacun des deux transistors (T1, T2) est relié à l'électrode concernée de la LED par l'intermédiaire d'une résistance de collecteur (R1, R2).

4. Circuit de protection selon la revendication 2 ou 3,
**caractérisé en ce que**
une diode de protection destinée à la prise en charge d'un éventuel courant inverse de la LED est montée entre les bornes de commutation destinées à être reliées à la LED, laquelle diode de protection est de polarité inverse à la LED.

5. Circuit de protection selon l'une quelconque des revendications 1 à 4,
**caractérisé en ce que**
celui-ci est formé comme un circuit intégré.

6. Circuit série de LEDs,
dans lequel un circuit de protection selon l'une quelconque des revendications 1 à 5 est associé à chaque LED.
